# EUROPÄISCHE PATENTANMELDUNG

(11) **EP 1 837 390 A1**
(43) Veröffentlichungstag der Anmeldung: **26.09.2007**
(21) Anmeldenummer: 07005924.1
(22) Anmeldetag: 22.03.2007
(51) Int. Cl.: C10L 5/44

(54) **Verfahren und Vorrichtung zur Aufbereitung von Rohholz o. dgl. Brenngut**

(30) Priorität: 23.03.2006 DE 102006013394
(71) Anmelder: Brinkhege, Peter, 49176 Hilter (DE)
(72) Erfinder: Brinkhege, Peter, 49176 Hilter (DE)
(74) Vertreter: Pott, Ulrich

(57) **Zusammenfassung**

Bei einem Verfahren zur Aufbereitung von Rohholz o. dgl. Brenngut durchläuft dieses eine Trocknungsphase und kann dann zur Wärmegewinnung bereitgestellt werden. Erfindungsgemäß ist vorgesehen, daß das rein biologische Brenngut unter Zugabe von Branntkalk aufbereitet wird und dieses Gemisch direkt oder nach einer an das Mischen anschließenden Verdichtung, insbesondere mittels einer auch zur Kalksand-Stein-Pressung verwendbaren Anlage, zur Wärmegewinnung genutzt wird.

## Beschreibung

Die Erfindung betrifft ein Verfahren zur Aufbereitung von Brenngut wie Rohholz, Trockenholz o. dgl. nachwachsenden Rohstoffen gemäß dem Oberbegriff des Anspruchs 1, eine Vorrichtung gemäß dem Oberbegriff des Anspruchs 15 sowie ein Brenngut gemäß dem Oberbegriff des Anspruchs 22.

Es ist allgemein bekannt, mit Brenngut in Form von Rohholz o. dgl. nachwachsenden Rohstoffen jeweilige übliche Energieträger wie Heizöl und Erdgas als Brennstoffe zu ersetzen. Dabei wird das als Abfall bei der Wertholz-Erzeugung anfallende Rohholz auch in Form von Hackschnitzeln o. dgl. Strukturen getrocknet, gepreßt und als raumsparend komprimiertes Endprodukt an den Verbraucher weitergegeben. Bei dieser Aufbereitung wird die Gesamtenergiebilanz wesentlich vom erreichbaren Trocknungsgrad des aufbereiteten Brenngutes beeinflußt, da ein bei der Verbrennung als maximal nutzbare Wärmemenge erreichbarer Heizwert wesentlich von der Rest-Feuchte bzw. dem Trocknungsgrad des Brenngutes abhängig ist (Holz-Zentralblatt, Nr. 5, 3. Februar 2006, Seite 131). Diese Trockenphase erfordert deshalb einen entsprechenden Aufwand.

Gemäß DE 32 26 798 C2 ist ein Verfahren zur Rückgewinnung von Brenngut vorgesehen, wobei eine Beseitigung und Verwertung von Abfallstoffen wie Klärschlamm durchgeführt und diesem zur Hygenisierung ein Branntkalkanteil zugemischt wird. Dabei müssen jedoch in einem mehrstufigen Prozeß die anorganischen Substanzen aus dem Schlammgemisch entfernt werden, um einen fasrigen Abfallstoff als organisches Zwischenprodukt zur Verbrennung zu erzeugen. Gemäß JP 2003201490 A wird ein fester Brennstoff aus Küchenabfällen und Sägespänen gepreßt, wobei diesem Gemisch auch Branntkalk zugegeben wird. Auch die Brennstoffherstellungen gemäß JP 10130672 A, JP 09215937 A, JP 09157670 A und JP 04080296 A sind auf eine jeweilige Verwertung von Abfallgemischen gerichtet, die schon prinzipiell aufwendige Verfahrensabläufe und Vorrichtungen erfordern, da Stoffgemische zu verarbeiten sind.

Die Erfindung befaßt sich mit dem Problem, ein Verfahren und eine Vorrichtung zur Aufbereitung von Brenngut in Form von Rohholz o. dgl. zu schaffen, derart, daß mit geringem technischem Aufwand ein einen gleichmäßig hohen Trocknungsgrad aufweisendes Brenngut erreicht wird, dessen raumsparende Verdichtung mit geringen Geräteinvestitionen möglich ist und das so aufbereitete Brenngut sowohl bei der Verbrennung als auch bei einer Entsorgung in Form von erzeugter Asche eine umweltschonend verbesserte Konsistenz aufweist.

Die Erfindung löst diese Aufgabe durch ein Behandlungsverfahren mit den kennzeichnenden Merkmalen des Anspruchs 1, eine Vorrichtung mit den kennzeichnenden Merkmalen des Anspruchs 15 sowie mit einem die Merkmale des Anspruchs 22 aufweisenden Brenngut.

Bei der erfindungsgemäßen Aufbereitung von Rohholz, Altholz, nachwachsenden Rohrstoffen o. dgl. Brenngut wird ein verbesserter Trocknungsgrad dadurch erreicht, daß das Brenngut unter Zugabe von Branntkalk aufbereitet, dabei die hygroskopische Wirkung des Branntkalks nach Art eines Trocknungsmittels für die Bindung von in dem Brenngut enthaltenem Wasser genutzt und dieses zumindest teilweise abgeleitet wird. Das danach vorliegende Brenngut ist durch einen vorteilhaft verringerten Wasser- bzw. Feuchtegehalt in seinem Heizwert verbessert, da beim Verbrennen geringere Energieverluste durch Wasserverdampfung auftreten. Für industrielle und private Anwendungen kann das als Rohholz-Branntkalk-Gemisch vorliegende Brenngut auch mit optimalem Trocknungszustand bzw. Rest-Feuchtigkeiten von weniger als 20 % bereitgestellt werden, wobei während des Verbrennungsprozesses eine zusätzliche chemische Bindung von Schadstoffen, z. B. Schwefel, erreicht wird und damit die Umweltbelastungen verringert sind.

Bei der Aufbereitung erfolgt die Zufuhr des Branntkalks oberflächlich auf das Brenngut durch einen Mischvorgang, so daß in dieser Aufbereitungsphase eine weitgehend gleichmäßige Verteilung des Branntkalks in der Rohholz-Mischung erreicht werden kann. Denkbar ist dabei, eine gleichzeitige oder nachfolgende Siebung des Gemisches durchzuführen, so daß jeweilige durch Wasserentzug aus dem Branntkalk gebildete Löschkalk-Teile vom danach trockneren Brenngut getrennt werden. Dabei kann diese Gemisch-Aufbereitung und Siebung so gesteuert werden, daß Branntkalk- bzw. Löschkalkanteile im erzeugten Gemisch-Zwischenprodukt in weiten Grenzen variabel sind und das optimal eingestellte Brenngut eine Konsistenz aufweist, die eine gleichmäßig trockene Brennstoffzuführung in einem Heizkessel o. dgl. Anlagen ermöglicht. Das als Gemisch vorliegende Brenngut weist damit auch bei wechselnder Holzfeuchte des Ausgangsstoffes nur geringe Schwankungen in den Verbrennungseigenschaften auf.

In zweckmäßiger Ausführung kann das in kleinteiliger Struktur vorliegende Brenngut-Branntkalk-Gemisch nach dem Misch- bzw. Siebvorgang durch einen an sich bekannten Preßvorgang raumsparend verdichtet werden. Durch den geringen Feuchtegehalt des damit erzeugten Endproduktes ist ein weiteres Trocknen beim Endverbraucher entbehrlich und eine einfache Lagerung möglich. Insbesondere erfolgt eine Pressung zu an sich bekannten und die zusätzlichen Brannt- bzw. LöschkalkAnteile aufweisenden Holzbriketts, die in handhabungsgerechter Paketform für den Endverbraucher bereitgestellt werden.

Die Herstellung dieser Branntkalk enthaltenden Holzbriketts erfolgt in vorteilhafter Ausführung unter Anwendung eines Rohmaterials in Form von ungetrocknetem Scheitholz, das weitgehend automatisiert nach Art bekannter Hackschnitzel-Herstellungen verarbeitet wird. Mittels der danach vorgesehenen Branntkalkzuführung in diese zerkleinerte Struktur wird ein weiter getrocknetes Zwischenprodukt erzeugt, das durch eine Verpressung zu eine handhabungsgerechte Größe aufweisenden Teilen verdichtet wird. Derartige Briketts sind ausgehend von feuchtem Scheitholz mittels der erfindungsgemäßen Behandlung sofort in einem anwendungsgerechten Trocknungszustand, so daß die Zwischenlagerung entbehrlich ist bzw. eine direkte Einleitung in einen Verbrennungsprozeß erfolgen kann. Nach dem optimalen Transport ist die Verbrennung in herkömmlichen Öfen möglich oder bei Anwendung der Holzbriketts in Hackschnitzel-Kesselanlagen können die raumsparend transportierten Holzbriketts auch durch vorgeschaltete Zerkleinerungseinrichtungen aufbereitet und danach dem Verbrennungsvorgang im Kessel o. dgl. zugeführt werden.

Für eine energie- und kostenoptimale Anwendung dieses Aufbereitungs-Verfahrens ist vorgesehen, an sich bekannte und bereits in einer Produktionslinie eines Kalksandstein- oder Gasbetonwerkes vorhandene Vorrichtungs- und Anlagenteile zu nutzen, so daß nur geringe Investitionen erfordernde Anpassungen notwendig sind. Insbesondere kann die Herstellung der Holzbriketts aus dem erfindungsgemäßen Gemisch vorteilhaft in auslastungsarmen Fertigungsperioden der Kalksandstein-Produktionslinie durchgeführt und diese damit effizient genutzt werden. Denkbar ist auch eine weitgehend parallele Nutzung der Kalksandstein-Anlage und einer in deren Nahbereich vorgesehenen Anlage zur Aufbereitung des Rohholz-Gemisches, das dabei in einer entsprechenden Freiphase der Preßanlagen-Nutzung zu den Holzbriketts verarbeitet wird. Vorteilhaft kann aus der Kalksandstein-Produktion (Bereich des Autoklaven) anfallende Abwärme für eine Vortrocknung des als Rohholz oder Hackschnitzel vorliegenden Brenngutes genutzt werden.

Die Aufbereitung des Brenngut-Branntkalk-Gemisches führt neben dem Feuchteentzug aus dem Rohholz dazu, daß in dem gesiebten Gemisch bzw. daraus erzeugten Holzbriketts jeweilige Anteile des Branntkalks sowie Anteile von aus diesem gebildeten Löschkalk enthalten sind. Damit können beim Verbrennungsvorgang Schadstoffe, z. B. schwefelhaltige Teile, gebunden werden, so daß die Schadstoffbelastung der Luft bei dieser Holz-Verbrennung vorteilhaft verringert ist. In der danach vorliegenden Asche des Brenngutes wird ein vorteilhaft erhöhter Anteil an mineralisch wirksamem Kalzium in Form von Kalziumcarbonat erreicht. Diese Holzasche weist damit eine Zusammensetzung auf, die eine weitere Nutzung als langzeitig wirksames Düngemittel ermöglicht.

Weitere Einzelheiten und vorteilhafte Ausgestaltungen der Erfindung ergeben sich aus der nachfolgenden Beschreibung, in der das erfindungsgemäße Verfahren und die Vorrichtung zur Aufbereitung des Brenngutes anhand von Zeichnungen näher veranschaulicht sind. In der Zeichnung zeigen:
- Fig. 1: eine schematische Übersicht über den Ablauf der erfindungsgemäßen Aufbereitung des Brenngutes,
- Fig. 2: eine Prinzipdarstellung der Vorrichtungen zur Mischung von Brenngut und Branntkalk, und
- Fig. 3: eine Prinzipdarstellung einer für die Brenngut-Aufbereitung genutzten Kalksandstein-Produktionslinie bekannten Aufbaus.

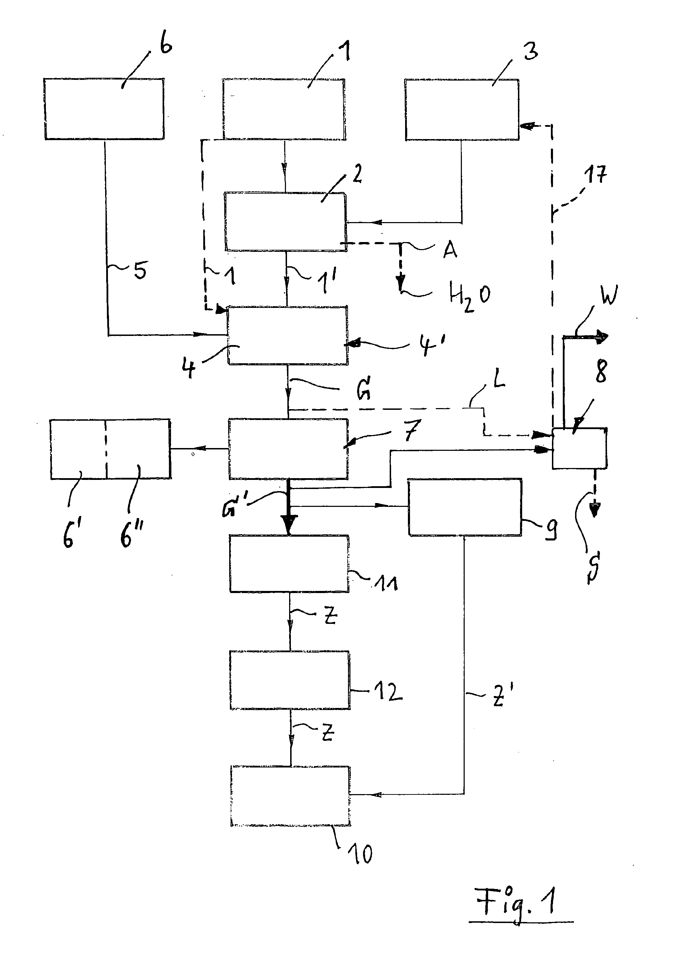

In Fig. 1 ist in einem Ablaufschema das prinzipielle Vorgehen beim Aufbereiten eines insbesondere aus Rohholz bestehenden Brenngutes 1 dargestellt. Das Brenngut 1 kann bei diesem Behandlungsablauf eine Trocknungsstufe 2 durchlaufen, wobei dem Brenngut 1 beispielsweise mittels einer Heißluftzuführung 3 ein Teil des die Holzfeuchtigkeit des Brenngutes 1 bestimmenden Wassers entzogen wird (Pfeil A). Danach wird das vorgetrocknete Brenngut 1' entsprechend dem erfindungsgemäßen Verfahrensablauf einer Mischphase 4' zugeführt, in der über eine Zuleitung 5 Branntkalk 6 eingeleitet und dieser mit dem Brenngut 1' gemischt wird. Denkbar ist auch, das Rohholz in Form von Scheitholz, Altholz, Schwachholz o. dgl. Beschaffenheit direkt in die Mischphase 4 zu überführen bzw. diese mit einer Zerkleinerung des Brenngutes 1 zu kombinieren (nicht dargestellt).

In zweckmäßiger Ausführung wird das als reines Rohholz vorliegende Brenngut 1 bereits in Form von Hackschnitzel, Pellets o. dgl. Zwischenprodukt mit großer Oberfläche in den Mischer 4 eingegeben und nur mit dem Branntkalk 6 gemischt. In der dargestellten Ausführung werden diese Zwischenprodukte bei 2 getrocknet und in der nachfolgenden Misch- bzw. Förderphase 4' wird der Branntkalk 6 zugesetzt. Das damit aufbereitete Branntkalk-Brenngut-Gemisch G kann über eine Förderleitung L direkt in eine Brennanlage 8 geleitet werden.

Die Zuführung von Branntkalk 6 in das Gemisch G kann dabei in mengenmäßig variablen Bereichen erfolgen, wobei sich bereits ein Gewichtsanteil von weniger als 1 % bis 10 %, vorzugsweise 3 % bis 5 %, des Branntkalks 6 am Gesamtgewicht des Gemisches als ausreichend herausgestellt hat.

In dem Mischer 4 wird der Branntkalk 6 in dem eine kleinstückige oder staubförmige Struktur aufweisenden Brenngut 1 so verteilt, daß durch die hygroskopische Wirkung des Branntkalks Wasseranteile des Holzes gebunden und damit die Holzfeuchte der Brenngut-Struktur verringert wird.

Diese automatisierbare Prozeßführung sieht vor, daß nach einer auf die Holzfeuchte und die Menge des zugesetzten Branntkalks abgestimmten Reaktionszeit (Mischzeit, Förderzeit) zumindest Teilmengen des zugegebenen Branntkalkes 6 vom am Ausgang des Mischers 4 vorliegenden Brenngut-Branntkalk-Gemisch G getrennt werden können. Da während der Misch- bzw. Reaktionszeit bei entsprechendem Wasseranteil im Rohholz 1 jeweilige Löschkalk-Teile gebildet werden, ist vorgesehen, diese aus dem Gemisch G zumindest anteilig zu entfernen.

Das aus dem Mischer 4 ausgeleitete Gemisch G wird deshalb vorteilhaft einer Siebanlage 7 zugeführt. Diese ist so konzipiert, daß entsprechend der Gemischzusammensetzung zumindest jeweilige Teilmengen des Branntkalks 6 in ungelöschter Form ausgesiebt werden können. Ebenso ist eine Steuerung des Siebvorgangs so vorgesehen, daß aus dem Branntkalk 6 durch Wasseraufnahme gebildete Teilmengen von Löschkalk durch die Siebanlage 7 vom Gemisch G getrennt werden. In Fig. 1 sind die Teilmengen des ausgesiebten Branntkalks mit 6' und die Teilmengen des ausgesiebten Löschkalks mit 6" prinzipiell angedeutet. Diese ausgesiebten Stoffe können zur Verwertung aufbereitet werden.

Es versteht sich, daß der in der Siebanlage 7 erreichbare Trocknungszustand des insbesondere aus Rohholz bestehenden Brenngutes 1 durch unterschiedliche Anteile des zugesetzten Branntkalks 6 veränderbar ist. Ausgehend von einem eine hohe Holzfeuchte aufweisenden Frischholz (mit einer Holzfeuchte von mehr als 30 %) kann in der Aufbereitungsphase eine Entfeuchtung dieses Rohholzes so erfolgen, daß dieses auf eine Feuchtigkeit von 0 % bis 16 %, vorzugsweise 8 %, getrocknet ist.

Nach dieser Bearbeitung und Aufbereitung liegt in der Siebanlage 7 ein Rohholz-Branntkalk-Gemisch G' vor, das ausgefördert und der Verbrennung zugeführt werden kann. In einer ersten denkbaren Ausführungsform wird das Gemisch G' direkt in eine Brennanlage 8 eingeleitet, so daß Heißluft oder Heißdampf als Nutzenergie W ableitbar ist und als Abprodukt Holzasche S entsteht. Die Aufbereitung des Brenngutes 1 mit dem Branntkalk 6 dient damit direkt einer gleichmäßig trockenen Brennstoffzufuhr für die Brennanlage 8.

Ebenso ist denkbar, daß das aufbereitete Gemisch G' einer dieses aufnehmenden Pelletieranlage 9 zugeführt wird. In dieser wird aus dem Gemisch G' ein versandfertiges Zwischenprodukt Z' erzeugt, das im Bereich einer Verpackungseinheit 10 abgepackt und zu einem Verbraucher transportiert werden kann.

In zweckmäßiger Ausführung ist vorgesehen, daß das Brenngut 1 und Branntkalk 6 enthaltende Gemisch G' zu einem optimale Teilmengen des Branntkalks 6 sowie Teilmengen von Löschkalk 6" enthaltenden Holzbrikett verarbeitet wird, wozu eine an sich bekannte Preßanlage 11 vorgesehen ist. In dieser gepreßte Holzbriketts mit den vorbeschriebenen Beimischungen werden als Zwischenprodukt Z einer Stapelanlage 12 zugeführt und können von dieser aus zu der Verpackungseinheit 10 weitergeleitet werden. Damit wird das mit Branntkalk 6 aufbereitete Brenngut 1 wahlweise als weiterverarbeitbares Zwischenprodukt Z oder Z' bereitgestellt.

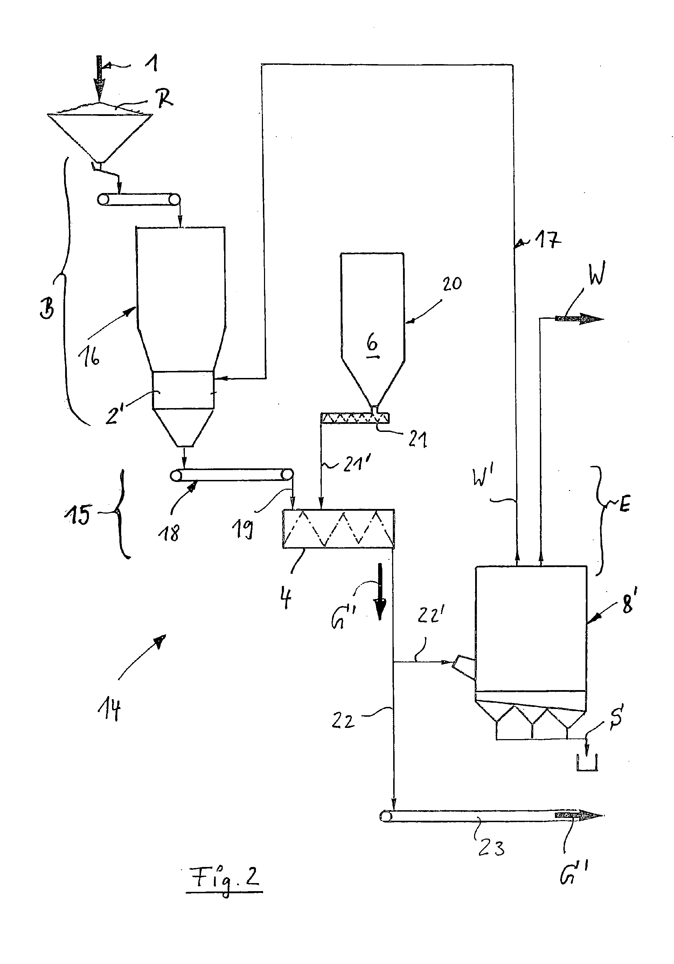

In Fig. 2 ist in einer Prinzipdarstellung eine Vorrichtung 14 zur Aufbereitung des Brenngutes 1 dargestellt. Als zentrale Baugruppe weist diese Aufbereitungsvorrichtung 14 eine Mischanlage 15 mit dem Mischer 4 auf. Diese Mischanlage 15 ist mit einer Brenngutzuführung B versehen, die mit einem Silo 16 zusammenwirkt, in das das Brenngut 1 in Form von vorgetrockneten Hackschnitzeln, Altholz, Scheitholz o. dgl. Rohholzteilen R eingefördert wird. Denkbar ist auch, jeweilige Teile R in Form von nachwachsenden Rohstoffen wie Getreide, Stroh o. dgl. beizumischen oder bei R fossile Brennstoffe wie Braunkohle o. dgl. hinzuzugeben.

Über eine eine Leitung 17 aufweisende Heizenergiezuführung E mit einer Brennanlage 8' kann in dieses Silo 16 die Trocknungsphase 2' (ähnlich Verfahrensführung gemäß Fig. 1) integriert sein.

Über eine Förderanlage 18 und eine Zuführleitung 19 gelangt das Brenngut 1 in den Mischer 4, der beispielsweise als Doppelwellenmischer oder Chargenmischer ausgebildet ist. Im Bereich dieses Mischers 4 ist ein den Branntkalk 6 enthaltender Vorratsbehälter 20 vorgesehen, dessen einen Förderer 21 aufweisende Austragleitung 21' in den Mischer 4 einmündet. Mit diesem Aufbau der Mischanlage 15 kann das Brenngut-Branntkalk-Gemisch G' erzeugt und über eine Förderleitung 22 zur Weiterbearbeitung geleitet werden. Denkbar ist dabei, daß über eine Förderleitung 22' eine direkte Verbindung zur Verbrennungsanlage 8' besteht, deren freigesetzte Energie in Form von Warmluft W in einer nachgeordneten Anlage einer weiteren Nutzung zugeführt wird. Gleichzeitig kann auch ein Teil der Wärmeenergie W' über die Warmluftleitung 17 in den Trockner 2 geleitet und zur Trocknung des rohen Brennstoffes 1 genutzt werden.

Für die Weiterverwendung des Gemisches G' im Bereich der Förderleitung 22 ergeben sich unterschiedliche Möglichkeiten, wobei auch eine direkte Verpackung (Fig. 1, bei 10) am Ende eines Förderbandes 23 denkbar ist. Daraus ergibt sich, daß beispielsweise Brenngut 1 in Form von Hackschnitzel-Holz mit Branntkalk gemischt, mit der Anlage in Tüten o. dgl. Verpackungsbehältnisse abgepackt und als Tütenware an Endverbraucher zur Verbrennung abgegeben wird.

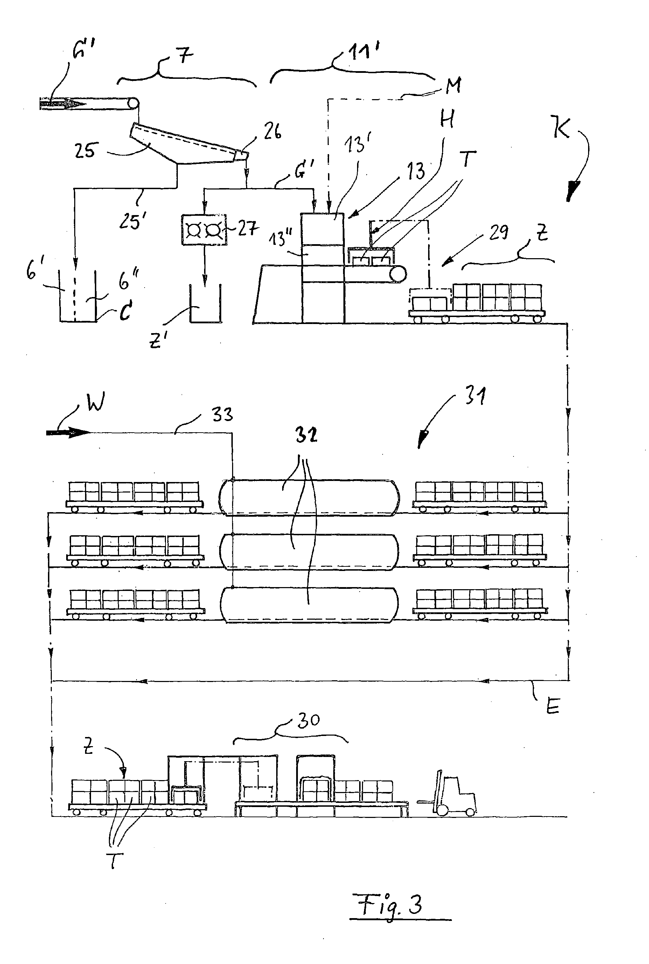

In Fig. 3 ist eine besonders vorteilhafte Weiterbearbeitung des Gemisches G' dargestellt, wobei dieses in den Bereich einer Preßanlage 11' gefördert wird. Dabei wird das in der Mischanlage 15 erzeugte Gemisch G' über eine Siebanlage 7 geführt und danach in eine Preßanlage 11' eingefördert. Diese Preßanlage 11' ist vorteilhaft als Teil einer an sich bekannten Kalksandstein-Fertigungslinie K vorgesehen, so daß bei dieser vorhandene technische Ausrüstungen und Anlagenteile bei der Bearbeitung des Gemisches G' einer erweiterten Nutzung zugeführt werden. Die Kalksandstein-Fertigung K erfordert eine Preßanlage 11 mit eine hohe Leistung bewirkenden Verdichtungswerkzeugen 13, die vorteilhaft für das erfindungsgemäße Gemisch G' zur Fertigung der erfindungsgemäß zusammengesetzten Holzbriketts T eingesetzt werden.

Ausgehend vom Bereich der Siebanlage 7 wird das Gemisch G' über eine eine untere Abführung 25' aufweisende Siebvorrichtung 25 geleitet, so daß entsprechend Branntkalk-Teile 6' bzw. Löschkalk-Teile 6" ausgesiebt und zur weiteren Verwendung in Sammelbehältern C bereitgestellt werden. Als vorteilhaft hat sich herausgestellt, bei einem Hackschnitzel und Kalk enthaltenden Gemisch G' eine Siebung mit einem Feinstsieb vorzunehmen. Damit wird der überwiegende Teil des zugeführten Kalks zurückgewonnen und kann als Wertstoff zur Düngung o. dgl. verwendet werden. Die am Hackschnitzel anhaftenden Branntkalk-Teile werden im Gemisch G' weiterbearbeitet.

Am Ausgang 26 der Siebvorrichtung 25 wird das eine entsprechende Teilchengröße aufweisende Gemisch G' erfaßt und kann entsprechend der vorgesehenen Zwischenproduktform zu Pellets Z' verarbeitet werden, wobei eine an sich bekannte Pelletiervorrichtung 27 genutzt wird.

Die Fertigungsanlage K ist insbesondere dafür vorgesehen, daß das gesiebte Gemisch G' direkt in die Preßanlage 11 geleitet werden kann und hier mittels des vorteilhaft hohe Verarbeitungsdrücke ermöglichenden Werkzeuges 13 bearbeitet wird. Dabei werden jeweilige den Preßformen im Ober- und/oder Unterwerkzeug 13', 13" entsprechende Holzbrikett-Formteile T erzeugt und mittels der Stapeleinheit H aus der Preßanlage 11' entnommen.

Unter Nutzung einer in der Kalksandstein-Anlage K vorhandenen Verpackungs- und Stapelvorrichtung H werden von dieser die Holzbriketts T als neue, nur in der Gestaltung mit Kalksandsteinen vergleichbare Zwischenprodukte Z auf einem Transportwagen 29 abgelegt, einer Verpackungsanlage 30 zugeführt, verpackt und für den Versand als verbrennungsfertige Endprodukte bereitgestellt. Diese Fertigung und Verpackung der Holzbriketts T erfolgt unter Umgehung (Pfeil E) einer für die Kalksandstein-Fertigung K vorhandenen Trocknungsanlage 31, bei der jeweilige Kalksandstein-Wagen 29' aufnehmende Autoklaven 32 zur Stein-Verfestigung vorgesehen sind.

Denkbar ist auch, daß die in Fig. 2 gezeigte direkte Einleitung des Gemisches G' in die Brennanlage 8' zur Dampferzeugung genutzt wird (Energiezufuhr gemäß Pfeil W, Fig. 3, linke Seite) und dabei in der Kalksandstein-Anlage K über eine Leitung 33 die Energie W in die Autoklaven 32 eingeleitet wird, und zwar nur dann, wenn die Anlage K für die Herstellung der Kalksandsteine genutzt wird (Zuführung des Kalksandstein-Gemisches M, Strichlinie gemäß Fig. 3, oben). Die effiziente Herstellung der Holzbriketts T ergibt sich folglich auch daraus, daß die vorhandene Kalksandstein-Anlage K zusätzlich durch die Verarbeitung des Brenngutes 1 ausgelastet ist, die außerhalb oder weitgehend parallel zu den Fertigungszeiten mit Stein-Gemischen M erfolgt.

Die Zusammenschau von Fig. 1 bis 3 macht deutlich, daß mit dem Aufbereiten des Brenngutes 1 mittels Branntkalk 6 die Wärmegewinnung beim Verbrennungsprozeß (z. B. im Kessel 8') durch höheren Trocknungsgrad des Gemisches G' verbessert werden kann. Das Gemisch G' enthält dabei einen Anteil von 0 % bis 10 %, vorzugsweise 4 %, des Branntkalks 6 und/oder des bei der Mischung gebildeten Löschkalks 6". Denkbar ist dabei auch, daß das Gemisch G' nach entsprechender Reaktionszeit im Mischer 4 nur noch aus Branntkalk gebildeten Löschkalk enthält, insbesondere mit einem Anteil, der nicht durch die Siebung aus dem Gemisch G' entfernt werden konnte. In jedem Fall ist ein für die optimale Energiegewinnung wesentlicher Anteil des im feuchten Rohholz R enthaltenen Wassers durch die Reaktion mit dem Branntkalk 6 gebunden und damit das im Gemisch G' enthaltene Brenngut so entfeuchtet, daß durch das beim Mischen und/oder Komprimieren auf konstante Holzfeuchte eingestellte Brenngut G' die Verbrennung und Wärmegewinnung optimal gesteuert werden kann.

Die vorteilhafte Aufbereitung des Gemisches G' mit Rohholz in Form von Holzschnitzeln R führt bei den durch Verdichtung erzeugten Briketts T zu einer Konsistenz, die durch entsprechende Optimierung von Zusammensetzung und Verdichtungsgrad auch für eine Verlängerung des Verbrennungsprozesses genutzt werden kann. Denkbar ist dabei, daß beispielsweise eine Abbranntverzögerung oder-beschleunigung erreicht wird. Dazu können die gepreßten Formstücke in Form von jeweilige Durchgangsöffnungen aufweisenden Holzbriketts T hergestellt werden, so daß durch diese Öffnungen, oberflächliche Mulden o. dgl. Ausformungen zusätzlich zur Beschaffenheit der Formstücke eine für die Verbrennung vorteilhafte Oberflächenstruktur erreicht ist.

Die als stapelbare Quader o. dgl. Formteile weitgehend beliebiger Abmessungen bereitgestellten Holzbriketts T können beim Endverbraucher ohne zusätzlichen Belüftungsaufwand gelagert werden, wobei denkbar ist, die Holzbriketts T als einzeln handhabbare Teile oder in einem Paket transportierbare Teile zur Verfügung zu stellen (Fig. 3, bei 30). Ebenso ist vorgesehen, die vorbeschriebene Kalksandstein-Anlage K bezüglich der Größe der erreichbaren Formstücke so auszunutzen, daß das Gemisch G' auch in einer gegenüber üblichen Brikett-Größen abweichenden Abmessung hergestellt werden kann.

Damit ist ein kompakter raumsparender Transport von insbesondere quaderförmigen Groß-Teilen möglich. Diese können dann vor der Einleitung eines örtlich von der Herstellung getrennten Verbrennungsprozesses einer vorgelagerten Zerkleinerung zugeführt und danach mit verbrennungsoptimaler Struktur in die Brennanlage 8 eingefördert werden.

Die erfindungsgemäße Aufbereitung des Brenngutes 1 in Form des Gemisches G' führt dazu, daß die Verbrennung dieses Gemisches G', in dem insbesondere nachwachsender Rohstoff wie Holz, Getreide o. dgl. enthalten sind, zu einer Naturprodukt-Asche S als Abfallprodukt führt, in dem ein erhöhter Anteil an Kalziumcarbonat enthalten ist. Damit ist diese Holzasche S nach entsprechender Aufbereitung, beispielsweise Komprimierung zu Körnern o. dgl. Strukturen, direkt als langzeitwirksames Düngemittel einsetzbar.

## Patentansprüche

1. Verfahren zur Aufbereitung von Rohholz o. dgl. Brenngut (1), das getrocknet und zur Wärmegewinnung (W, W') bereitgestellt wird, **dadurch gekennzeichnet, daß** das Brenngut (1) unter Zugabe von Branntkalk (6) aufbereitet wird.

2. Verfahren nach Anspruch 1, **dadurch gekennzeichnet, daß** dem feuchten Brenngut (1) bei der Zugabe von Branntkalk (6) Wasser entzogen und ein Brenngut (G, G') mit höherem Heizwert bereitgestellt wird.

3. Verfahren nach Anspruch 1 oder 2, **dadurch gekennzeichnet, daß** das zu einer kleinstückigen oder staubförmigen Struktur verarbeitete Brenngut (1) mit dem Branntkalk (6) gemischt wird.

4. Verfahren nach einem der Ansprüche 1 bis 3, **dadurch gekennzeichnet, daß** zumindest Teilmengen des zugegebenen Branntkalks (6) nach einer Reaktionszeit vom Brenngut-Branntkalk-Gemisch (G) getrennt werden.

5. Verfahren nach einem der Ansprüche 1 bis 4, **dadurch gekennzeichnet, daß** während der Misch- bzw. Reaktionszeit gebildeter Löschkalk dem gemischten Brenngut (G) entzogen wird.

6. Verfahren nach einem der Ansprüche 1 bis 5, **dadurch gekennzeichnet, daß** das als Rohholz vorliegende Brenngut (1) in Form von Hackschnitzel, Pelletts o. dgl. Produktstruktur mit großer Oberfläche mit dem Branntkalk (6) gemischt wird.

7. Verfahren nach Anspruch 6, **dadurch gekennzeichnet, daß** das Rohholz getrocknet und in einer nachfolgenden Misch- und/oder Förderphase (4') der sich zumindest teilweise am Brenngut (1) anlagernde Branntkalk (6) zugesetzt wird.

8. Verfahren nach einem der Ansprüche 1 bis 7, **dadurch gekennzeichnet, daß** dem Brenngut-Gemisch (G) jeweils weniger als 1 % bis 10 %, vorzugsweise 3 % bis 5 %, des Gesamtgewichts in Form des Branntkalks (6) zugegeben wird.

9. Verfahren nach einem der Ansprüche 1 bis 8, **dadurch gekennzeichnet, daß** jeweilige Teilmengen (6') des Branntkalks in ungelöschter Form und/oder aus dem Branntkalk (6) gebildete Teilmengen des Löschkalks (6") durch eine Siebung (7) vom Gemisch (G) getrennt werden.

10. Verfahren nach einem der Ansprüche 1 bis 7, **dadurch gekennzeichnet, daß** der Trocknungszustand des insbesondere aus Rohholz bestehenden Brenngutes (1) im Gemisch (G) durch unterschiedliche Anteile zugesetzten Branntkalks (6) verändert wird.

11. Verfahren nach einem der Ansprüche 1 bis 10, **dadurch gekennzeichnet, daß** das im Gemisch (G') enthaltene Brenngut (1) in seinem Trocknungszustand auf eine Feuchtigkeit von 0 % bis 16 %, vorzugsweise 8 %, eingestellt wird.

12. Verfahren nach einem der Ansprüche 1 bis 11, **dadurch gekennzeichnet, daß** das unter Zugabe von Branntkalk (6) aufbereitete Brenngut (1) zu einem festen Formstück (Z, Z') verarbeitet wird und dabei Bearbeitungsphasen einer an sich bekannten Produktionslinie für gepreßte Kalksandsteine verwendet werden.

13. Verfahren nach Anspruch 12, **dadurch gekennzeichnet, daß** das aus Brenngut und Branntkalk erzeugte Gemisch (G') zu einem Teilmengen von Branntkalk (6) sowie Teilmengen von Löschkalk (6") enthaltenden Brikett (T), insbesondere Holzbrikett, verdichtet wird.

14. Verfahren nach Anspruch 12 oder 13, **dadurch gekennzeichnet, daß** das Gemisch (G) unmittelbar nach dem Mischvorgang (4') mit dabei erhöhter Temperatur verdichtet wird.

15. Vorrichtung zur Durchführung des Verfahren nach einem der Ansprüche 1 bis 14, **dadurch gekennzeichnet, daß** diese (14) mit einer das Brenngut (1) und den Branntkalk (6) aufnehmenden Mischanlage (15) versehen ist.

16. Vorrichtung nach Anspruch 15, **dadurch gekennzeichnet, daß** das in einem Silo (16) o. dgl. gelagerte Brenngut (1) einer zentralen Trocknungsanlage (2') zuführbar und danach das vorgetrocknete Brenngut (1) zur Mischanlage (15) weiterleitbar ist.

17. Vorrichtung nach Anspruch 15 oder 16, **dadurch gekennzeichnet, daß** diese mit einem Doppelwellenmischer, einem Chargenmischer o. dgl. Mischanlage (15) versehen ist.

18. Vorrichtung nach einem der Ansprüche 15 bis 17, **dadurch gekennzeichnet, daß** diese eine das Gemisch (G') aufnehmende Preßanlage (11) aufweist.

19. Vorrichtung nach einem der Ansprüche 15 bis 18, **dadurch gekennzeichnet, daß** das in der Mischanlage (15) erzeugte Gemisch (G') einer an sich zur Kalksandstein-Formung (K) verwendbaren Preßanlage (11') zuführbar und deren Verdichtungswerkzeug (13) nach Art einer Brikett-Presse einsetzbar ist.

20. Vorrichtung nach einem der Ansprüche 15 bis 19, **dadurch gekennzeichnet, daß** diese mit einer das Gemisch (G') im Bereich vor der Preßanlage (11') aufnehmenden Siebanlage (7) versehen ist.

21. Vorrichtung nach einem der Ansprüche 15 bis 20, **dadurch gekennzeichnet, daß** diese (14) vorzugsweise im Bereich hinter der Preßanlage (11') eine die Formteile (T) aufnehmende Verpackungs- und/öder Stapelvorrichtung (29, 30) aufweist.

22. Brenngut, insbesondere aus zumindest einem nachwachsenden Rohstoff wie Holz, Getreide o. dgl., das in weitgehend trockenem Zustand zur Wärmegewinnung (W, W') einsetzbar ist, **dadurch gekennzeichnet, daß** das Brenngut (1) mit Branntkalk (6) versehen ist.

23. Brenngut nach Anspruch 22, **dadurch gekennzeichnet, daß** dieses als ein aus Rohholz (R) und Branntkalk (6) erzeugtes Gemisch (G') ausgebildet ist und dessen Gesamtgewicht einen Anteil von weniger als 1 % bis 10 %, vorzugsweise 4 %, des Branntkalks (6) und/oder aus diesem gebildeten Löschkalks (6") enthält.

24. Brenngut nach Anspruch 22, **dadurch gekennzeichnet, daß** dieses nur aus Branntkalk (6) gebildeten Löschkalk (6") enthält und in diesem jeweilige Wasseranteile durch eine Reaktion mit dem feuchten Rohholz (R) gebunden sind.

25. Brenngut nach einem der Ansprüche 22 bis 24, **dadurch gekennzeichnet, daß** das jeweils Rohholz (R) in Form von Holzschnitzel, Teilmengen von Branntkalk (6) und/oder Teilmengen von Löschkalk (6") enthaltende Gemisch (G')einer Verdichtung zuführbar ist.

26. Brenngut nach einem der Ansprüche 22 bis 25, **dadurch gekennzeichnet, daß** das Gemisch (G') ein nach Art eines Holzbriketts (T) gepreßtes Formstück bildet.

27. Brenngut nach einem der Ansprüche 22 bis 26, **dadurch gekennzeichnet, daß** das als Formstück (T) verdichtete Brenngut-Gemisch mit einer Durchgangsöffnungen o. dgl. Ausformungen aufweisenden Oberflächenstruktur versehen ist.

28. Brenngut nach einem der Ansprüche 22 bis 27, **dadurch gekennzeichnet, daß** das brikettierte Brenngut (T) in Form von stapelbaren Quadern unterschiedlichen Volumens bereitstellbar ist.

29. Brenngut nach einem der Ansprüche 22 bis 28, **dadurch gekennzeichnet, daß** das brikettierte Brenngut (T) als loses Einzelteil handhabbar bzw. in einem Paket transportierbar ist.

30. Brenngut nach einem der Ansprüche 22 bis 24, **dadurch gekennzeichnet, daß** dieses als vorbereitetes Gemisch (G') nach einer Zerkleinerung für eine Pelletierung (9) vorgesehen ist.

31. Brenngut nach einem der Ansprüche 22 bis 24, **dadurch gekennzeichnet, daß** dieses als Gemisch (G') in einer Umverpackung bereitstellbar ist.

32. **Düngemittel,** aus einem nachwachsenden Rohstoff (R) mit Branntkalk enthaltenden Brenngut, das nach einem der Ansprüche 1 bis 31 hergestellt ist, und nach einem Verbrennungsvorgang als Asche (S) bereitgestellt wird.
